# EUROPEAN PATENT SPECIFICATION

(11) **EP 0 246 102 B1**
(45) Date of publication and mention of the grant of the patent: **08.09.1993**
(21) Application number: 87304301.2
(22) Date of filing: 14.05.1987
(51) Int. Cl.: B65D 65/40, B32B 27/08

(54) **Packaging material for longterm storage of shelf stable food products**
Verpackungsmaterial für das Lagern von Nahrungsmitteln für lange Dauer
Matériau d'emballage pour le stockage à long terme de produits alimentaires

(30) Priority: 16.05.1986 US 864170
(43) Date of publication of application: 19.11.1987
(73) Proprietor: W.R. Grace & Co.-Conn., New York, New York 10036 (US)
(72) Inventor: Koteles, Randal M., Gray Court, Soth Carolina 29645 (US); Bradfute, John Galloway, Greer, South Carolina 29651 (US)
(74) Representative: Collier, Jeremy Austin Grey

(56) References cited:
- EP-A- 0 196 798
- GB-A- 1 591 424
- US-A- 4 284 674
- US-A- 4 407 873

## Description

This invention relates generally to the art of packaging films and more particularly to films useful in the packaging of food products.

It is common practice in packaging many goods, including food items, to use what is generally known as form-fill-seal equipment. In the vertical form-fill-seal arrangement, flexible packaging material is fed from a rollstock to a tube former where a tube is fashioned from the sheet material into a vertically dependent, upwardly open tube having overlapping longitudinal edges. These overlapping edges are subsequently sealed together longitudinally by means well known in the art and the end of the tube is sealed together by pairs of transverse heat seals which are vertically spaced apart. At this point the tube is filled with a measured quantity of the product to be packaged. A second heat sealing operation, typically performed after the filled tube has been downwardly advanced, completes enclosure of the product. Simultaneously with or shortly after the transverse heat sealing step the tube is completely transversely severed by known cutting means in a space between the vertically spaced apart pairs of transverse heat seals. Thereafter the tube is downwardly advanced and the cycle is successively repeated so as to form a multiplicity of individually packaged products.

Alternatively, a single transverse heat seal including a pair of horizontally spaced apart sealing jaws may be used to form in effect two vertically adjacent heat seals which are simultaneously or subsequently severed at a line vertically intermediate the heat seals.

Flexible packaging material useful for this as well as other applications typically must meet stringent requirements imposed by the particular food or other article to be packaged. In some cases, for example in high acid foods such as tomato paste and other tomato products, the package must be capable of adequately protecting the food item after packaging and through the distribution cycle until the packaged product reaches the end user at point of sale.

Additionally, products such as those described above are sometimes introduced into the form tube at relatively high temperatures of about 200°F (93°C). The formed package must be able to withstand the still relatively high temperatures immediately after packaging, and subsequent cooling operations to bring the package to room temperature or other desired temperature range. Dimensional stability of the packaging material in such high temperature regimes is necessary to prevent warping and distortion of the package after filling.

The flexible material must also have sufficient abuse resistance to physical and mechanical abuse imposed by the entire form-fill-seal or other packaging system.

Yet another requirement of packaging material, especially in form-fill-seal systems, is good heat sealability with respect to the transverse heat seals, which are typically subjected to loading forces from the introduced product such as food product, soon after the heat seal is formed.

Limited oxygen transmission through the packaging material under both low and high humidity conditions is an essential feature of a packaging material for long-term storage of oxygen sensitive food products. This oxygen barrier feature should maintain the packaged food products for an extended period of twelve months or more.

U.S. Patent No. 4,284,674 issued to Sheptak discloses a multilayer film having a core layer of ethylene vinyl alcohol copolymer adhered on each side to nylon, each nylon layer in turn being adhered to a chemically modified polyolefin, and a further layer of primer material suitable to adhere the modified polyolefin to an outer layer of polypropylene or other materials suitable for conveying toughness, flexcrack resistance and moisture barrier properties to the multi-ply film.

U S. Patent No. 4,355,721 issued to Knott et al discloses a coextruded multilayer sheet having a first layer of nylon, an EVOH barrier layer, another layer of nylon, an adhesive layer, and another outside layer of, for example, high density polyethylene.

U.S. Patent No. 4,398,635 issued to Hirt discloses a medication package in which a coextruded multiple layer sheet may have a structure including a layer of ethylene vinyl alcohol copolymer sandwiched between adjacent layers of nylon, and in which one of the nylon layers may be further adhered to a tie resin. The nylon layers may form either an outside surface or, in one example, internal layers with additional layers of polymeric materials added to each side of the sandwich structure.

U.S. Patent No. 4,407,873 issued to Christensen et al, discloses a packaging material for retort applications including a heat seal layer of linear low density polyethylene, a second layer of linear low density polyethylene with optionally 0% to 80% medium density polyethylene blended into the second layer, a third layer of anhydride modified medium density polyethylene, a fourth layer of nylon, a fifth layer of ethylene vinyl alcohol copolymer, and a sixth layer of nylon.
GB-A-1591424 (W.R. GRACE & CO) discloses a process for preparing a package of food which process comprises enclosing said food tightly in a laminate film comprising at least one heat-shrinkable layer adherent to at least one non-heat shrinkable film, said laminate film containing at least one oxygen barrier layer having a permeability to dry oxygen of less than 70cc/m² atmospheres at 23°C. The heat shrinkable layer is selected from a variety of polyolefins and is preferably crosslinked polyethylene. The preferred oxygen barrier layer is a blend of nylon-6 and hydrolysed ethylene vinyl acetate copolymer. It is disclosed that it is possible to use vinylidene dichloride copolymer in the film but this is not preferred; the specification states that this copolymer possesses many disadvantages which make it difficult material to use in food packaging.

EP-A-0196798 (W.R. GRACE & CO), published after the priority date of the present application, discloses composite films having high oxygen barrier characteristics obtained using a combination of ethylene vinyl alcohol copolymer and vinylidene chloride copolymer in separate component films.

The present invention provides a thermoplastic laminate suitable for the packaging of food products, especially high acid content food products at relatively high temperatures. The new thermoplastic laminates are useful in form-fill-seal machines, especially vertical form-fill-seal machines. They provide extended shelf life of twelve months or more to food products such as high acid content food products.

The laminates can be made into a package for food products which can be reheated in boiling water without delamination or breakage, and they provide good oxygen barrier properties at both low and high relative humidities.

One particularly useful feature of packages produced in accordance with the invention is their usefulness in packaging food products currently packaged in No. 10 metal cans. These cans are expensive and bulky, and present a disposal problem after use of the contained food product. Utilizing the multilayer film of the present invention, many food products now packaged in the No. 10 can can be conveniently and quickly packaged, stored for an extended period of time, shipped, marketed, and sold to the end user such as a commercial or institutional user or a consumer. After use, the emptied package made from the multilayer laminate provides a much less bulky package for disposal.

A thermoplastic laminate, in accordance with the present invention, comprises a first substrate comprising a layer of ethylene vinyl alcohol copolymer, a layer of a polyamide and a sealant layer comprising a linear low density polyethylene copolymer; and a second substrate bonded to the first substrate and comprising a vinylidene chloride copolymer. The laminate may also include a third substrate disposed between and bonded to the first and second substrates and comprising a polyamide.

The invention also provides a process for making such a laminate, which comprises extruding the first and second substrates and adhering the first substrate to the second substrate. In one embodiment such a process may comprise extruding first, second and third substrates and adhering the first and second substrates to opposite surfaces of the third substrate.

### DEFINITIONS

The terms "linear low density polyethylene", "LLDPE", and the like are used herein to refer to copolymers of ethylene with one or more comonomers selected from C₄ to C₁₀ alphaolefins such as butene-1, and octene, in which the molecules of the copolymers comprise long chains with few side chain branches or cross-linked structures. This molecular structure is to be contrasted with conventional low or medium density polyethylenes which are more highly branched than their respective counterparts. "LLDPE" as defined herein has a density usually in the range of from about 0.916 grams per cubic centimeter to about 0.925 grams per cubic centimeter.

The term "polyamide" refers to high molecular weight polymers having amide linkages along the molecular chain, and refers more specifically to synthetic polyamide such as various nylons.

The terms "intermediate layer", "interior layer", and the like are used herein to define a layer in a multilayer film bounded on both sides by other layers.

The terms "anti-blocking agent" and the like are used herein to describe substances that reduce the tendency of films or sheets of polyolefin film to stick or adhere to each other or to other surfaces when such adhesion is otherwise undesirable. Typical chemicals such as colloidal silica, finely divided silica, clays, silicones, and certain amides and amines are useful for this purpose.

The term "ethylene vinyl alcohol copolymer" is used herein to describe a vinyl alcohol copolymer having an ethylene comonomer, and prepared by, for example, hydrolysis of vinyl acetate copolymers, or by chemical reactions with polyvinyl alcohol.

The term "vinylidene chloride copolymer" is used herein to refer to various copolymers of vinylidene chloride with comonomers such as vinyl chloride, various acrylates, and nitriles. These copolymers are commonly referred to as saran, and are characterized by good oxygen barrier properties, especially at high relative humidities, and good moisture barrier properties.

The term "tie layer" refers herein to a layer of a multilayer film or laminate which adheres two other layers to each other by chemical and/or physical mechanisms.

In the accompanying drawings,
Figure 1 is a schematic cross section of a preferred embodiment of a multilayer laminate of the invention;
Figure 2 is a schematic cross section of another embodiment of a multilayer laminate in accordance with the invention;
Figure 3 is a schematic cross section of another embodiment of the laminate in accordance with the invention;
Figure 4 is a schematic cross section of still another embodiment of the multilayer laminate in accordance with the invention;
Figure 5 is a schematic cross section of yet another embodiment of a multilayer laminate; and
Figure 6 is a schematic cross section of an additional embodiment of the multilayer laminate.

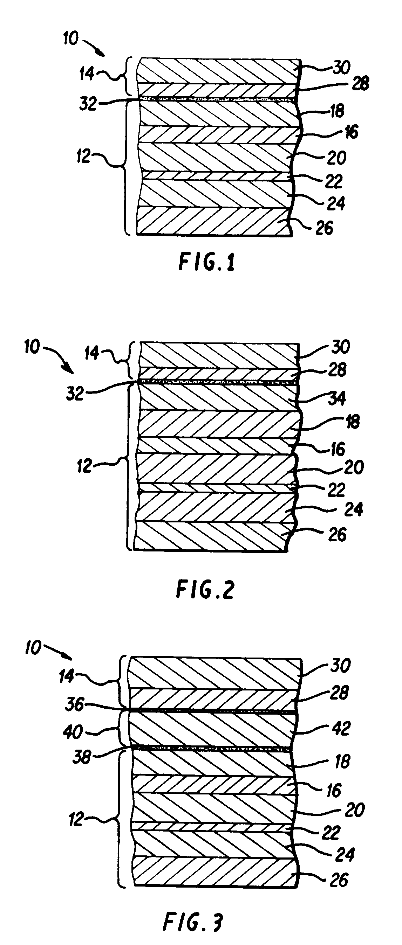

The structure depicted in fig. 1 is a thermoplastic laminate 10 having a first substrate 12 and second substrate 14, each comprising a multilayer film.

First substrate 12 includes a layer 16 of an ethylene vinyl alcohol copolymer adhered on each surface to layers 18 and 20 respectively, each comprising a polyamide. A suitable ethylene vinyl alcohol copolymer is EVAL ECF101 available from EVAL Company of America. Preferred polyamides for layers 18 and 20 are nylon 6, nylon 12, and nylon 6/12. Capron 8207F, commercially available from Allied Chemical Company is a suitable nylon. Layer 18 provides a bonding surface for bonding by, for example, a lamination adhesive to second substrate 14.

Polyamide layer 20 is adhered by means of a tie layer 22 to a layer 24 comprising a low density polyethylene. Tie layer 22 is preferably a chemically modified polymeric material such as Plexar 3 available from Norchem. This particular adhesive is an ethylene vinyl acetate-based modified adhesive. A suitable low density polyethylene for layer 24 is 3404 available from Norchem. Sealant layer 26 comprises a linear low density polyethylene.

An alternative first substrate can be substantially as just described, but without low density polyethylene layer 24.

Referring now to second substrate 14 of figure 1, a bonding layer 28 comprises a vinylidene chloride copolymer bonded to a sealant layer 30 comprising a linear low density polyethylene such as Dowlex 2045 from Dow Chemical Company. Preferred sarans are vinylidene chloride/vinyl chloride copolymers available from Dow and Solvay. Sealant layer 30 may also comprise a blend of two linear low density polyethylene resins, such as a blend of 70% Dowlex 2045 and 30% Dowlex 2035, both resins available from Dow Chemical Company.

Dowlex 2045 is a copolymer of ethylene and octene with a density at 23°C of about 0.920 grams per cubic centimeter and a melt flow index (ASTM-D-1238) of from about 0.7 to about 1.2 grams per ten minutes. Dowlex 2035 is a linear low density polyethylene with a melt flow index (ASTM-D-1238) of about 6.

The adhesive layer 32 representing, for example, a lamination adhesive, serves to laminate first substrate 12 to second substrate 14. The adhesive layer 32, and the other adhesive layers depicted in the other drawing figures, are shown with exaggerated thickness in solid shading for purposes of clarity. In practice, lamination adhesives forming these adhesive layers are typically very thin.

Referring now to figure 2 of the drawings, a thermoplastic laminate similar to that of figure 1 is shown, in which an additional layer 34 forms part of first substrate 12. Layer 34 functions as the bonding layer for the first substrate 12, and is preferably a polyamide and more preferably a copolyamide such as a nylon 6/nylon 12 copolyamide, Grillon CR-9 copolymer, available from Emser Industries.

Figure 3 of the drawings illustrates a thermoplastic laminate 10, having a first substrate 12, and second substrate 14, and a third substrate 40 disposed between the first two substrates and bonded to each of them. First substrate 12 is preferably a multilayer film such as the film described above and represented in figure 1. Similarly, second substrate 14 is preferably a multilayer film such as the second substrate 14 described with reference to figure 1.

Third substrate 40 preferably comprises a polyamide, more preferably a biaxially oriented polyamide layer 42. A preferred polyamide is a biaxially oriented version of the polyamide of layers 18 and 20. It has been found that in Form-Fill-Seal applications in which a heated food product is being packaged, biaxially oriented polyamide contributes to the dimensional stability of the package. The two opposite surfaces of layer 42 are bonding surfaces for adhering one surface of layer 42 to first substrate 12, and the opposite surface of layer 42 to second substrate 14, by for example lamination adhesion. Adhesive layers 36 and 30 bond substrates 14 and 40, and substrates 40 and 12 respectively.

It will be noted that in the preferred embodiments described above, the second substrate 14 typically includes a sealant layer of, for example, linear low density polyethylene or a blend of linear low density polyethylenes of varying density and/or melt index, with a saran coating applied to the linear low density polyethylene layer to provide the high relative humidity barrier properties necessary in a long-hold, shelf stable food package. In these embodiments, the saran coating typically functions not only in the capacity of a barrier layer, but also as a bonding surface for adhering the second substrate 14 either directly to first substrate 12 or to third substrate 40. It may be advantageous in some circumstances to coextrude or otherwise produce a multilayer substrate 14 in which a vinylidene chloride copolymer is disposed as an internal layer within a multi-layer structure of the substrate. This may provide processing or economic advantages not obtained by utilizing a saran coating on a polyolefin layer.

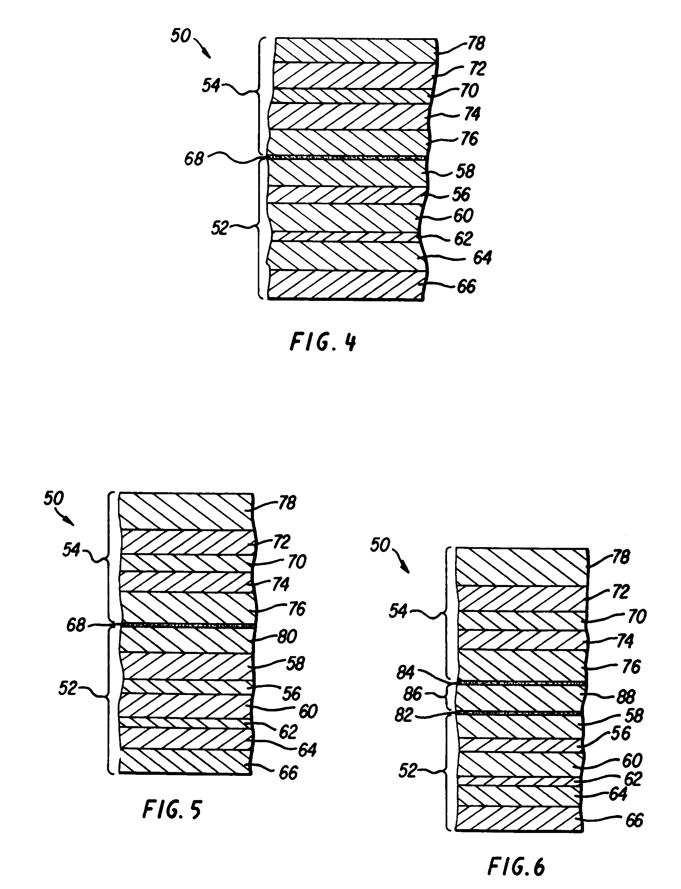

Such structures are schematically shown in figures 4 through 6. In a two substrate embodiment, shown in figure 4, first substrate 52 is esssentially the same as first substrate 12 of Figure 1, and is bonded by any of various bonding mechanisms 68, including lamination adhesives, to second substrate 54.

Thus, substrate 52 includes a layer 56 of ethylene vinyl alcohol copolymer adhered on each surface thereof to polyamide layers 58 and 60 respectively. Tie layer 62 adheres polyamide layer 60 to layer 64 comprising a low density polyethylene. Sealant layer 66 comprises a linear low density polyethylene.

Substrate 54 comprises an internal layer 70, comprising vinylidene chloride copolymer, bounded on either side by layers 72 and 74 comprising an ethylene-unsaturated ester copolymer, preferably ethylene vinyl acetate copolymer. Suitable ethylene vinyl acetate copolymers are those available from E1 Paso Products Co., and designated PE 204 CS 95.

Bonding layer 76 is also an ethylene-unsaturated ester copolymer such as ethylene vinyl acetate copolymer.

The sealant layer 78 is preferably linear low density polyethylene, which may be similar to those resins used in sealing layer 30 described above.

First substrate 52 may include an additional layer 80 extruded therewith, layer 80 preferably comprising a polyamide or copolyamide such as that of layer 34. This is shown in figure 5.

Figure 6 of the drawings illustrates a thermoplastic laminate 50 having a first substrate 52, a second substrate 54, and a third substrate 86 comprising layer 88. The two opposite surfaces of layer 88 can provide bonding surfaces for adhering the third substrate 86 to the first and second substrates by means of adhesive layers 82 and 84 respectively. Layer 88 is preferably a biaxially oriented polyamide such as that described for layer 42.

Examples of laminates produced in accordance with the present invention are given below.

### EXAMPLE 1

A linear low density polyethylene (Sclair) substrate of 2.0 mils (0.05 mm) thickness was coated with a coating of PV-864 unplasticized vinylidene chloride vinyl chloride copolymer (Solvay).

A multilayer film having the construction 90% Dowlex 2035 + 10% Antiblock/Norchem 3404 low density polyethylene/Plexar 3/Capron 8207F/EVAL EC-F101/Capron 8207F was produced by a cast coextrusion process, and then laminated to the coated substrate with adhesive, the saran coating and the Capron 8207F acting as the bonding layers for the laminate.

Water vapor transmission at 100°F (38°C), 100% RH for a laminate averaging about 6.32 mils (0.161 mm) thickness (for three samples) averaged about 0.24 grams/ (24 hours, 100 square inches or 645 cm²) (ASTM F 372). Oxygen transmission rates at 73°F (23°C), 0% RH for a laminate averaging about 6/51 mils (0.165 mm) thickness (for three samples) averaged about 0.3 cc STP/(24 hours, square meter, atmosphere) (ASTM D-3985). The same ASTM test methodology was used for the remaining examples.

### EXAMPLE 2

A laminate similar to that of Example 1 was prepared in a similar procedure, but having a blend of 70% Dowlex 2045, 30% Dowlex 2035, and a small amount of antiblock agent in the linear low density polyethylene substrate. Water vapor transmission at 100°F (38°C), 100% RH for a laminate averaging about 6.36 mils (0.162 mm) thickness averaged about .22 grams / (24 hours, 100 square inces or 645 cm²). Oxygen transmission rates at 73°F (23°C), 0% RH, sample thickness averaging about 6.44 mils (0.164 mm), averaged about .2 cc STP/(24 hours, square meter, atmosphere).

### EXAMPLE 3

A laminate was prepared using procedures similar to those described above for Example 1, and having a similar coextruded structure. Instead of a coated linear low density polyethylene substrate, a substrate having the structure Dowlex 2045 and antiblock/Dowlex 2045/Alathon 3170/PV864/Alathon 3170/PE204CS95 was coextruded and laminated to the ethylene vinyl alcohol-containing structure. Alathon 3170 is an ethylene vinyl acetate copolymer available from Du Pont. PE 204CS95 is an ethylene vinyl acetate copolymer available from E1 Paso Polyolefins Company, and having a density at 23°C of from about 0.9232 to about 0./9250 grams per cubic centimeter and a melt flow (ASTM D1238) of about 2.0 grams per ten minutes. This material contains from about 3.3 to about 4.1 percent vinyl acetate derived units. Samples averaging 6.16 mils (0.156 mm) thickness displayed a water vapor transmission rate of about .25 grams/(24 hours, 100 square inches or 645 cm²) at 100°F (38°C), 100% RH. Samples averaging 6.34 mils (.0161 mm) thickness had an oxygen vapor transmission rate, at 73°F (23°C), 0% RH of about .2 cc STP/(24 hours, square meter, atmosphere).

### EXAMPLE 4

A three-substrate laminate was prepared, substantially as described in Example 1, but with a third substrate made of a biaxially oriented nylon 6. The third substrate was laminated between and bonded to the first two substrates by means of lamination adhesive. A water vapor transmission rate of about .23 grams/(24 hours, 100 square inches or 645 cm²) at 100% RH was obtained from laminates of 7.51 mils (0.191 mm) average thickness. An oxygen transmission rate of about .2 cc STP/(24 hours, square meter, atmosphere) at 73°F (23°C), 0% RH was obtained from laminates of 7.51 mils (0.191 mm) average thickness.

### EXAMPLE 5

A three-substrate laminate was prepared substantially as described in Example 2, but with a third substrate as described in Example 4. The water vapor transmission rate was comparable to that of Example 4, at an average laminate thickness of 6.83 mils (0.173 mm). An oxygen transmission rate of about .5 cc STP/(24 hours, square meter, atmosphere) at 73°F (23°C), 0% RH was obtained from laminates of 7.10 mils (0.180 mm) average thickness.

Various changes and modifications to the invention can be made by one skilled in the art without departing from the scope of the claims as presented below.

## Claims

1. A thermoplastic laminate comprising:
(a) a first substrate comprising a layer of ethylene vinyl alcohol copolymer (A), a layer of a polyamide (B) and a sealant layer comprising a linear low density polyethylene copolymer (C); and
(b) a second substrate bonded to the first substrate and comprising a vinylidene chloride copolymer (D).

2. A laminate according to claim 1 wherein the first substrate comprises:
(a) a first layer comprising a polyamide (B1);
(b) a second layer comprising an ethylene vinyl alcohol copolymer (A);
(c) a third layer comprising a polyamide (B2);
(d) a tie layer (E); and
(e) a sealant layer comprising a linear low density polyethylene copolymer (C).

3. A laminate according to claim 2 wherein the first substrate further comprises an additional layer disposed between the tie layer (E) and sealant layer (C) and comprising a low density polyethylene (F).

4. A laminate according to claim 2 or 3 wherein the first substrate further comprises an additional layer comprising a polyamide (B3), said additional layer disposed on the surface of the first substrate, and in bonding relationship to the second substrate.

5. A thermoplastic laminate according to claim 1, 2 or 3 wherein the first substrate is bonded to the second substrate by a third substrate disposed between and bonded to the first and second substrates and comprising a polyamide (G).

6. A laminate according to claim 5 wherein the polyamide of the third substrate (G) is biaxially oriented.

7. A laminate according to any of claims 1 to 6 wherein the second substrate comprises:
(a) a sealant layer comprising a linear low density polyethylene (H), and
(b) a bonding layer comprising a vinylidene chloride copolymer (D).

8. A laminate according to claim 7 wherein the vinylidene chloride copolymer (D) is a coating on the sealant layer (H).

9. A laminate according to any one of claims 1 to 6 wherein the second substrate comprises:
(a) a sealant layer comprising a linear low density polyethylene (H);
(b) intermediate layers each comprising an ethylene-unsaturated ester copolymer (J1);
(c) a core layer of vinylidene chloride copolymer disposed between the intermediate layers (D); and
(d) an inner bonding layer comprising an ethylene-unsaturated ester copolymer (J2).

10. A laminate according to any one of claims 1 to 9 wherein the substrates are at least in part bonded to each other by a lamination adhesive.

11. A process for making a thermoplastic laminate as claimed in any of claims 1 to 10, which comprises:
(a) coextruding the first substrate comprising a layer of ethylene vinyl alcohol copolymer (A), a layer of a polyamide (B) and a sealant layer comprising linear low density polyethylene copolymer (C);
(b) extruding the second substrate comprising a vinylidene chloride copolymer (D); and
(c) adhering the first substrate to the second substrate.

12. A process according to claim 11, which comprises:
(a) extruding the first substrate comprising a layer of an ethylene vinyl alcohol copolymer (A), a layer of a polyamide (B) and a sealant layer comprising linear low density polyethylene copolymer (C);
(b) extruding the second substrate comprising a vinylidene chloride copolymer (D);
(c) extruding a third substrate comprising a polyamide (G); and
(d) adhering the first and second substrates to opposite surfaces of the third substrate.

## Patentansprüche

1. Thermoplastisches Laminat, das
(a) ein erstes Substrat, das eine Schicht aus Ethylen-Vinylalkohol-Copolymer (A), eine Schicht aus Polyamid (B) und eine Versiegelungsschicht umfaßt, die lineares Polyethylencopolymer mit niedriger Dichte umfaßt; und
(b) ein zweites Substrat umfaßt, das an das erste Substrat gebunden ist und Vinylidenchlorid-Copolymer (D) umfaßt.

2. Laminat nach Anspruch 1, bei dem das erste Substrat
(a) eine erste Schicht, die Polyamid (B1) umfaßt;
(b) eine zweite Schicht, die Ethylen-Vinylalkohol-Copolymer (A) umfaßt;
(c) eine dritte Schicht, die Polyamid (B2) umfaßt;
(d) eine Verbindungsschicht (E); und
(e) eine Versiegelungsschicht umfaßt, die lineares Polyethylencopolymer mit niedriger Dichte (C) umfaßt.

3. Laminat nach Anspruch 2, bei dem das erste Substrat außerdem eine zusätzliche Schicht umfaßt, die zwischen der Verbindungsschicht (E) und der Versiegelungsschicht (C) angeordnet ist und Polyethylen mit niedriger Dichte (F) umfaßt.

4. Laminat nach Anspruch 2 oder 3, bei dem das erste Substrat außerdem eine zusätzliche Schicht umfaßt, die Polyamid (B3) umfaßt, wobei die zusätzliche Schicht auf der Oberfläche des ersten Substrats und in verbindender Beziehung zu dem zweiten Substrat angeordnet ist.

5. Thermoplastisches Laminat nach Anspruch 1, 2 oder 3, bei dem das erste Substrat mit dem zweiten Substrat durch ein drittes Substrat verbunden ist, das zwischen dem ersten und dem zweiten Substrat angeordnet ist und Polyamid (G) umfaßt.

6. Laminat nach Anspruch 5, bei dem das Polyamid des dritten Substrats (G) biaxial orientiert ist.

7. Laminat nach einem der Ansprüche 1 bis 6, bei dem das zweite Substrat
(a) eine Versiegelungsschicht, die ein lineares Polyethylen mit niedriger Dichte (H) umfaßt, und
(b) eine Bindungsschicht umfaßt, die ein Vinylidenchlorid-copolymer (D) umfaßt.

8. Laminat nach Anspruch 7, bei dem das Vinylidenchlorid-Copolymer (D) eine Beschichtung auf der Versiegelungsschicht (H) ist.

9. Laminat nach einem der Ansprüche 1 bis 6, bei dem das zweite Substrat
(a) eine Versiegelungsschicht, die ein lineares Polyethylen mit niedriger Dichte (H) umfaßt,
(b) Zwischenschichten, die jeweils Copolymer aus Ethylen und ungesättigtem Ester (J1) umfassen,
(c) eine Kernschicht aus Vinylidenchlorid-Copolymer (D), die zwischen den Zwischenschichten angeordnet ist; und
(d) eine innere Bindungsschicht umfaßt, die Copolymer aus Ethylen und ungesättigtem Ester umfaßt.

10. Laminat nach einem der Ansprüche 1 bis 9, bei dem die Substrate mindestens zum Teil durch einen Laminierungsklebstoff aneinander gebunden sind.

11. verfahren zur Herstellung eines thermoplastischen Laminats nach einem der Ansprüche 1 bis 10, bei dem
(a) das erste Substrat, das eine Schicht aus Ethylen-Vinylalkohol-Copolymer (A), eine Schicht aus Polyamid (B) und eine Versiegelungsschicht umfaßt, die lineares Polyethylencopolymer mit niedriger Dichte (C) umfaßt, coextrudiert wird;
(b) das zweite Substrat, das Vinylidenchlorid-Copolymer (D) umfaßt, extrudiert wird, und
(c) das erste Substrat auf das zweite Substrat geklebt wird.

12. Verfahren nach Anspruch 11, bei dem
(a) das erste Substrat, das eine Schicht aus Ethylen-Vinylalkohol-Copolymer (A), eine Schicht aus Polyamid (B) und eine Versiegelungsschicht umfaßt, die lineares Polyethylencopolymer mit niedriger Dichte (C) umfaßt, extrudiert wird;
(b) das zweite Substrat, das Vinylidenchlorid-Copolymer (D) umfaßt, extrudiert wird,
(c) ein drittes Substrat, das Polyamid (G) umfaßt, extrudiert wird; und
(c) das erste Substrat und das zweite Substrat auf gegenüberliegende Oberflächen des dritten Substrats geklebt werden.

## Revendications

1. Stratifié thermoplastique comprenant :
(a) un premier substrat comprenant une couche d'un copolymère d'éthylène-alcool vinylique (A), une couche d'un polyamide (B) et une couche d'un agent d'étanchéité comprenant un copolymère de polyéthyène linéaire de faible densité (C) ; et
(b) un second substrat lié au premier substrat et comprenant un copolymère de chlorure de vinylidène (D).

2. Stratifié selon la revendication 1, où le premier substrat comprend :
(a) une première couche comprenant un polyamide (B1);
(b) une seconde couche comprenant un copolymère d'éthylène-alcool vinylique (A);
(c) une troisième couche comprenant un polyamide (B2);
(d) une couche d'attache (E); et
(e) une couche d'un agent d'étanchéité comprenant un copolymère d'un polyéthylène linéaire de faible densité (C).

3. Stratifié selon la revendication 2, où le premier substrat comprend de plus une couche additionnelle disposée entre la couche d'attache (E) et la couche de l'agent d'étanchéité (C) et comprenant un polyéthylène de faible densité (F).

4. Stratifié selon la revendication 2 ou 3, où le premier substrat comprend de plus une couche additionnelle comprenant un polyamide (B3), ladite couche additionnelle étant disposée à la surface du premier substrat et en relation de liaison avec le second substrat.

5. Stratifié thermoplastique selon la revendication 1, 2 ou 3, où le premier substrat est lié au second substrat par un troisième substrat disposé entre et lié aux premier et second substrats et comprenant un polyamide (G).

6. Stratifié selon la revendication 5, où le polyamide du troisième substrat (G) est biaxialement orienté.

7. Stratifié selon l'une quelconque des revendications 1 à 6, où le second substrat comprend :
(a) une couche d'un agent d'étanchéité comprenant un polyéthylène linéaire de faible densité (H), et
(b) une couche de liaison comprenant un copolymère (D) de chlorure de vinylidène

8. Stratifié selon la revendication 7, où le copolymère (D) de chlorure de vinylidène est un revêtement sur la couche (H) de l'agent d'étanchéité.

9. Stratifié selon l'une quelconque des revendications 1 à 6, où le second substrat comprend :
(a) une couche d'un agent d'étanchéité comprenant un polyéthylène linéaire de faible densité (H);
(b) des couches intermédiaires, chacune comprenant un copolymère d'éthylène-ester insaturé (J1);
(c) une couche formant âme en un copolymère de chlorure de vinylidène disposée entre les couches intermédiaires (D); et
(d) une couche interne de liaison comprenant un copolymère d'éthylène-ester insaturé (J2).

10. Stratifié selon l'une quelconque des revendications 1 à 9, où les substrats sont au moins partiellement liés l'un à l'autre par un adhésif de stratification.

11. Procédé de production d'un stratifié thermoplastique selon l'une quelconque des revendications 1 à 10, qui comprend :
(a) la coextrustion du premier substrat comprenant une couche d'un copolymère d'éthylène-alcool vinylique (A), une couche d'un polyamide (B) et une couche d'un agent d'étanchéité comprenant un copolymère de polyéthylène linéaire de faible densité (C);
(b) l'extrusion du second substrat comprenant un copolymère de chlorure de vinylidène (D); et
(c) l'adhérence du premier substrat au second substrat.

12. Procédé selon la revendication 11, qui comprend :
(a) l'extrusion du premier substrat comprenant une couche d'un copolymère d'éthylène-alcool vinylique (A), une couche d'un polyamide (B) et une couche d'un agent d'étanchéité comprenant un copolymère de polyéthylène linéaire de faible densité (C);
(b) l'extrusion du second substrat comprenant un copolymère de chlorure de vinylidène (D);
(c) l'extrusion d'un troisième substrat comprenant un polyamide (G); et
(d) l'adhérence des premier et second substrats aux surfaces opposées du troisième substrat.
